# EUROPÄISCHE PATENTANMELDUNG

(11) **EP 2 206 601 A1**
(43) Veröffentlichungstag der Anmeldung: **14.07.2010**
(21) Anmeldenummer: 09175359.0
(22) Anmeldetag: 09.11.2009
(51) Int. Cl.: B32B 17/10, H05B 3/86

(54) **Scheibe mit einem Funktionselement**

(30) Priorität: 15.01.2009 DE 102009004732; 08.01.2009 DE 102009004045
(71) Anmelder: Saint-Gobain Glass France, 92400 Courbevoie (FR)
(72) Erfinder: Rateiczak, Mitja, 52146, Würselen (DE); Retsch, Cornelia, 52066, Aachen (DE); von der Weiden, Ingo, 52074, Aachen (DE); Arslan, Ilkay, 52074, Aachen (DE); Wohlfeil, Dirk, 4730, Raeren (BE)
(74) Vertreter: Lendvai, Tomas

(57) **Zusammenfassung**

Scheibe mit integrierten Scheibensegment umfassend:
- eine obere Scheibe (1),
- eine Zwischenschicht (3) umfassend:
- eine optisch transparente Klebefolie (4a),
- ein Tageslichtblocker (5) wobei der Tageslichtblocker (5) eine Transmission für Licht der Wellenlänge 300 nm bis 800 nm von < 10 % und für Licht der Wellenlänge von 800 bis 1000 nm von > 20 % aufweist und

- eine untere Scheibe (2).

## Beschreibung

Die Erfindung bezieht sich auf eine Scheibe mit einem Tageslicht absorbierenden Scheibensegment, einem heizbaren Scheibensegment, ein Verfahren zu deren Herstellung und deren Verwendung.

Viele Fahrzeuge, Flugzeuge, Hubschrauber und Schiffe sind mit verschiedenen optischen Sensoren ausgestattet. Beispiele für optische Sensoren sind Kamerasysteme wie Videokameras, Nachtsichtkameras, Restlichverstärker oder passive Infrarotdetektoren wie FLIR (Forward Looking Infrared). Die Kamerasysteme können dabei Licht im ultravioletten (UV), sichtbaren (VIS) und infraroten Wellenlängenbereich (IR) nutzen. Damit lassen sich auch bei schlechten Witterungsverhältnissen wie Dunkelheit und Nebel, Gegenstände, Fahrzeuge sowie Personen präzise erkennen. Auch im Automobilbereich können diese Kamerasysteme in Kraftfahrzeugen hinter der Windschutzscheibe im Fahrgastraum platziert werden. Die Kamerasysteme bieten auch im Straßenverkehr die Möglichkeit, Gefahrensituationen und Hindernisse rechtzeitig zu erkennen.

Weitere Einsatzbereiche für optische Sensoren liegen in der elektronischen Distanzmessung (EDM), beispielsweise mit Hilfe von Laserentfernungsmessern. Hierbei kann beispielsweise die Entfernung zu anderen Fahrzeugen bestimmt werden. Derartige Systeme sind im militärischen Anwendungsbereich weit verbreitet, aber auch im zivilen Bereich ergeben sich viele Anwendungsmöglichkeiten. Durch Abstandsmessungen zum vorausfahrenden Fahrzeug lässt sich der notwendige Sicherheitsabstand bestimmen und damit die Verkehrssicherheit deutlich erhöhen. Bei automatischen Warnsystemen verringert sich damit die Gefahr eines Auffahrunfalls deutlich.

Die Funktionsweise und Empfindlichkeit derartiger Sensoren, insbesondere bei Systemen die infrarote Strahlung nutzen, wird sehr stark auch von elektromagnetischer Strahlung anderer Wellenlängen beeinflusst. So setzten größere Anteile ultravioletten und sichtbaren Lichtes die Empfindlichkeit des Sensors deutlich herab. Dies erschwert insbesondere Tagsüber und in den Dämmerungsstunden den Einsatz derartiger Systeme. Zudem haben verschiedene Windschutzscheibengläser unterschiedliche Absorptions- und Transmissionswerte, so dass die Sensorsysteme, beispielsweise IR-Kameras, für jeden Scheibentyp individuell angepasst werden müssen. Diese Anpassung ist in der Praxis nur schwierig vorzunehmen.

US 2003/0059218 A1 offenbart einen Sensor im Fahrgastraum eines Fahrzeuges. Der Sensor ist dabei in einer Blende hinter der Windschutzscheibe des Fahrzeugs angeordnet. Um zu verhindern, dass der Sensor mit Staubpartikeln in Berührung kommt, kann die Blende mit einem Filtersystem ausgestattet werden. Gleichzeitig verhindert der Luftaustausch durch den Filter ein Beschlagen des Sensors. Dieser kann so hinter der Windschutzscheibe platziert werden, dass die Scheibenwischer das visuelle Feld des Sensors sauber halten.

US 2003/0010890 A1 offenbart einen Sensor hinter der Windschutzscheibe eines Fahrzeuges. Der eigentliche Sensor ist dabei in einer Blende angeordnet. Diese vermindert das Auftreten störender Reflexionen. Eine in der Blende angeordnete Glasscheibe lenkt den einfallenden Strahlengang zum Sensor. In einer bevorzugten Ausführungsform kann die in der Blende angeordnete Glasscheibe so angeordnet werden, dass störende Lichtanteile abgelenkt oder absorbiert werden.

Die Erfindung hat die Aufgabe, die Empfindlichkeit eines hinter der Scheibe montierten Sensors zu verbessern. Dabei sollen möglichst hohe Anteile der genutzten elektromagnetischen Wellenlängen den Sensor erreichen und gleichzeitig störende elektromagnetische Wellenlängen zurückgehalten werden. Weiterhin muss der Sensor auch bei unterschiedlichen Frontscheibengläsern ohne komplizierte Nachjustage des Sensors einsatzfähig sein.

Die Aufgabe der vorliegenden Erfindung wird erfindungsgemäß durch eine Scheibe mit einem Tageslicht absorbierenden Scheibensegment nach den unabhängigen Ansprüchen 1, 12, 13 und 14 gelöst. Bevorzugte Ausführungen gehen aus den Unteransprüchen hervor.

Die erfindungsgemäße Scheibe mit integriertem Scheibensegment umfasst eine obere Scheibe, eine Zwischenschicht und eine untere Scheibe. Der Begriff "obere Scheibe" bezieht sich auf die der Außenseite zugewandten Scheibe. Der Bergriff "untere Scheibe" bezieht sich auf die dem Innenraum, beispielsweise eines Fahrzeugs, zugewandten Seite. Die Fläche des Scheibensegments richtet sich nach dem vom Sensor ausgehenden Strahlengang, insbesondere der Größe des Scheibenbereichs, der für die entsprechende elektromagnetische Strahlung durchlässig sein muss und wird durch die Fläche und Größe des in der Zwischenschicht laminierten Tageslichtblockers definiert. Die Zwischenschicht umfasst mindestens eine optisch transparente Klebefolie und einen Tageslichtblocker. Der Tageslichtblocker kann sowohl als semitransparente Folie, als auch in Form eines semitransparenten Körpers ausgebildet sein. Semitransparent bedeutet in diesem Zusammenhang, hohe Transmissionswerte für die vom Sensor detektierte elektromagnetische Strahlung und/oder gleichzeitig hohe Absorptionswerte für die nicht vom Sensor genutzte Störstrahlung. Der Tageslichtblocker umfasst sowohl organische und anorganische Polymere, als auch anorganische Kristalle die das oben beschriebene Absorptionsverhalten zeigen. Die Größe des Tageslichtblockers richtet sich nach der Größe des Sensors und der damit verbundenen Lichteinfallfläche. Der Tageslichtblocker und damit das Scheibensegment weist bevorzugt eine Größe von 50 cm² bis 500 cm² auf. Der Tageslichtblocker weist bevorzugt eine Transmission für Licht der Wellenlänge 300 nm bis 800 nm von < 10 % und für Licht der Wellenlänge von 800 nm bis 1000 nm von > 20 % auf. Der Tageslichtblocker absorbiert bevorzugt den größten Teil des sichtbaren Lichtes von 300 nm bis 800 nm und lässt gleichzeitig den größten Teil der infaroten Strahlung zum Sensor passieren.

Die Zwischenschicht kann eine oder mehre Klebefolien enthalten, in die der Tageslichtblocker eingelegt wird. Als Klebefolien können transparente Polymere wie PVB (Polyvinylbutyral), EVA (Ethylenvinylacetat) oder optisch transparente Kleber verwendet werden. Der Tageslichtblocker wird dann entweder von einer Klebefolie oder der unteren Scheibe und/oder oberen Scheibe nach außen abgeschlossen.

Das Scheibensegment entspricht in seinen Dimensionierungen und seiner Positionierung auf der Scheibe den Abmessungen des Tageslichtblockers.

Der Tageslichtblocker weist besonders bevorzugt eine Transmission für Licht der Wellenlänge 380 nm bis 880 nm von < 5 %, bevorzugt < 0,1 % auf.

Der Tageslichtblocker weist bevorzugt eine Transmission für Licht der Wellenlänge 880 nm bis 920 nm von > 50 %, bevorzugt > 85 % auf.

Der Tageslichtblocker umfasst bevorzugt mindestens ein Polymer, besonders bevorzugt PBT (Polybutylenterephthalat), PC (Polycarbonat), PET (Polyethylenterephthalat), EVA (Ethylvinylacetat), PVB (Polyvinylbutyral) und/oder Blockpolymere oder Copolymere davon.

Die optisch transparente Klebefolie umfasst bevorzugt eine obere optisch transparente Klebefolie und eine untere optisch transparente Klebefolie. Damit lässt sich der Tageslichtblocker wie in einem Sandwich in der Zwischenschicht fixieren. Da die Klebefolie flexibel ist, ist das Risiko einer Beschädigung des Tageslichtblockers beim Laminieren der Scheibe minimiert.

Die Zwischenschicht ist bevorzugt in einer Klebefolie eingebettet. Die Zwischenschicht bestehend aus Klebefolie und Tageslichtblocker kann auch in eine Aussparung der Klebefolie zwischen der oberen und unteren Scheibe eingesetzt werden. Die Zwischenschicht wird besonders bevorzugt als Trilayer aus oberer Klebefolie, Tageslichtblocker und unterer Klebefolie in die Klebefolie eingesetzt. Die Zwischenschicht lässt sich auf diese Art und Weise auch als Modul vorfertigen.

Die obere Scheibe und/oder untere Scheibe umfassen bevorzugt einen der folgenden Werkstoffe: Glas und/oder Polymer, besonders bevorzugt Flachglas und/oder Polymethylmethacrylat.

Das Scheibensegment enthält bevorzugt eine schmutzabweisende Beschichtung, besonders bevorzugt eine hydrophobe Beschichtung. Diese erhöht den Kontaktwinkel von polaren Flüssigkeiten wie Wasser auf der Oberfläche der Scheiben und verringert damit die Benetzung der Oberfläche. Die Flüssigkeit läuft schneller ab und reinigt die Oberfläche. Entsprechende Beschichtungen können hydrophobe Silane wie Alkylalkohol- bzw. Alkylchlorsilanen, beispielsweise Octyltrimethoxysilan enthalten. Zusätzlich können TiO₂ Partikel auf der Oberfläche aufgebracht werden. Diese zersetzen unter Sonnenlicht katalytisch organische Schmutzpartikel an der Scheibenoberfläche. Beispiele für derartige Beschichtungen werden auch in den Patentanmeldungen EP 0 850 204 A1 und EP 0 927 144 A1 offenbart. Die Beschichtungen sind bevorzugt auf der oberen Scheibe und/oder unteren Scheibe des Scheibensegments aufgebracht.

Das Scheibensegment weist bevorzugt eine Fläche von 1 cm² bis 10000 cm², besonders bevorzugt 50 cm² bis 1000 cm², insbesondere bevorzugt von 100 cm² bis 500 cm² auf. Die Fläche richtet sich dabei im Wesentlichen nach dem vom Sensor ausgehenden Strahlengang, insbesondere der Größe des Scheibenbereichs, der für die entsprechende elektromagnetische Strahlung durchlässig sein muss und wird durch die Fläche und Größe des Tageslichtblockers definiert. Das Scheibensegment nimmt bevorzugt weniger als 20 % der Fläche der erfindungsgemäßen Scheibe ein.

Das Scheibensegment hat bevorzugt eine kreisförmige, elliptische, rechteckige, oder trapezförmige Form. Die Form richtet sich dabei besonders bevorzugt nach der wie oben beschriebenen Form des Strahlengangs des Sensors.

Die Erfindung hat die weitere Aufgabe, den vom Sensor genutzten Scheibenbereich eis- und beschlagsfrei zu halten. Gleichzeitig darf die Funktionsweise des Sensors durch die Heizvorrichtung im Vergleich zur unbeheizten Scheibe nicht oder nur unwesentlich eingeschränkt werden.

Die Aufgabe der vorliegenden Erfindung wird erfindungsgemäß durch eine Scheibe mit beheizbarem Scheibensegment nach dem unabhängigen Anspruch 11 gelöst.

Die erfindungsgemäße Scheibe mit beheizbarem, optisch transparentem Scheibensegment umfasst eine obere Scheibe, eine im Bereich des Scheibensegments beheizbare, optisch transparente Zwischenschicht und eine untere Scheibe. Die Fläche des Scheibensegments richtet sich nach dem vom Sensor ausgehenden Strahlengang, insbesondere der Größe des Scheibenbereichs, der für die entsprechende elektromagnetische Strahlung durchlässig sein muss und wird durch die Fläche und Größe des in der Zwischenschicht laminierten Heizelements definiert. Das Merkmal "optisch transparent" bezieht sich im Rahmen dieser Erfindung auf den Wellenlängenbereich von 200 nm bis 2000 nm, bevorzugt 400 nm bis 1300 nm. Die gemittelte Transmission beträgt bevorzugt mehr als 50 %, besonders bevorzugt mehr als 75 %.

Die beheizbare, optisch transparente Zwischenschicht umfasst wenigstens eine obere Klebefolie, ein Heizelement, eine elektrisch leitende Verbindung zum Heizelement und eine untere Klebefolie. Die elektrisch leitende Verbindung kann beispielsweise als Draht um das Heizelement gewickelt sein, oder bei einer elektrisch leitfähigen Beschichtung des Heizelements an mindestens zwei Stellen mit diesem verbunden sein. Die elektrisch leitende Verbindung verbindet das Heizelement mit einer Spannungsquelle.

Die beheizbare, optisch transparente Zwischenschicht wird bevorzugt in eine Klebefolie eingebettet. Damit lässt sich die beheizbare Zwischenschicht vorfertigen und einfach in eine ausgeschnittene Klebefolie einsetzten.

Das Heizelement umfasst bevorzugt ein optisch transparentes Polymer mit einer elektrisch leitfähigen Kontaktierung. Die elektrisch leitfähige Kontaktierung kann aus einer leitfähigen Beschichtung oder aus elektrischen Leiterbahnen bestehen. Beide sind dabei bevorzugt im entsprechenden Wellenlängenbereich optisch transparent oder so dünn, dass sie die optische Transparenz nicht einschränken. Die eigentliche Heizwirkung erfolgt durch den elektrischen Widerstand des optisch transparenten Polymers und der elektrisch leitfähigen Kontaktierung.

Die elektrisch leitfähige Beschichtung umfasst bevorzugt Fluor dotierten Zinndioxid (F:SnO₂) Zinn dotiertes Indiumoxid (ITO), Silber, Kupfer, Zinn, Gold, Aluminium, Eisen, Wolfram, Chrom oder Legierungen davon und/oder ein leitfähiges organisches Polymer. Beispiele für leitfähige organische Polymere sind Polyacetylen, Polyanilin, Polyparaphenylen, Polypyrrol, Polythiophen, sowie entsprechende Block- und/oder Copolymere.

Die elektrisch leitfähigen Leiterbahnen umfassen bevorzugt Fluor dotierten Zinndioxid (F:SnO₂) Zinn dotierten Indiumoxid (ITO), Silber, Kupfer, Zinn, Gold, Aluminium, Eisen, Wolfram, Chrom oder die entsprechenden Legierungen.

Das optisch transparente Polymer umfasst bevorzugt PBT (Polybutylenterephthalat), PC (Polycarbonat), PET (Polyethylenterephthalat), EVA (Ethylvinylacetat), PVB (Polyvinylbutyral) und/oder Blockpolymere oder Copolymere davon.

Das Heizelement weist bevorzugt einen elektrischen Widerstand von 1 Ω/□ bis 50 Ω/□, bevorzugt von 8 Ω/□ bis 40 Ω/□, besonders bevorzugt von 20 Ω/□ bis 30 Ω/□ auf.

Die elektrische leitende Verbindung enthält bevorzugt einen Leiter aus Fluor dotierten Zinndioxid (F:SnO₂), Zinn dotierten Indiumoxid (ITO), Silber, Kupfer, Zinn, Gold, Aluminium, Eisen, Wolfram, Chrom oder Legierungen davon und/oder ein elektrisch leitfähiges Klebeband. Leitfähige Klebebänder können polymere Filme und/oder Bänder umfassen, die entweder selbst elektrisch leitend sind oder entsprechend leitfähig beschichtet sind.

Das elektrisch leitfähige Klebeband umfasst bevorzugt ein leitfähiges organisches Polymer wie Polyacetylen, Polyanilin, Polyparaphenylen, Polypyrrol, Polythiophen, sowie Block- und Copolymere davon.

Die Erfindung beinhaltet des Weiteren ein Verfahren zur Herstellung einer erfindungsgemäßen Scheibe mit Tageslichtblocker. Eine obere Scheibe, eine Klebefolie, ein Tageslichtblocker und eine untere Scheibe werden verbunden und anschließend laminiert. Das Laminieren erfolgt bevorzugt im Autoklaven. Typische Temperaturbereiche sind dabei 100 °C bis 150 °C, typische Drücke von 6 bar bis 12 bar. Die Laminierung dauert typischerweise von 65 min bis 180 min.

Die Herstellung einer erfindungsgemäßen Scheibe kann auch die folgenden Schritte umfassen. Zuerst werden die Klebefolien und der Tageslichtblocker zur Zwischenschicht verbunden. Dieses so erzeugte Modul kann daraufhin in eine vorher ausgeschnittene Klebefolie eingesetzt werden. Die Klebefolie wird mit einer oberen Scheibe und einer unteren Scheibe verbunden und im Autoklaven bei 65 °C bis 180 °C und 6 bar bis 12 bar für 65 min bis 180 min laminiert.

Die Herstellung einer Scheibe mit beheizbarem optisch transparentem Scheibensegment erfolgt bevorzugt analog dem oben beschriebenen Verfahren. Ergänzend hierzu werden nur der Tageslichtblocker gegen ein Heizelement und eine elektrisch leitende Verbindung zum Heizelement ausgetauscht.

In einem ersten Schritt wird die elektrische Verbindung, beispielsweise ein dünner Draht, am Heizelement befestigt. Das Heizelement mit elektrisch leitender Verbindung wird dann zwischen zwei Klebefolien und einer oberen Scheibe, sowie einer unteren Scheibe laminiert. Das Laminieren erfolgt dabei bevorzugt im Autoklaven. Typische Temperaturbereiche sind dabei 100 °C bis 150 °C, typische Drücke von 6 bar bis 12 bar. Die Laminierung dauert typischerweise von 65 min bis 180 min.

Die Herstellung einer erfindungsgemäßen Scheibe kann auch die folgenden Schritte umfassen. Zuerst werden die Klebefolien und das Heizelement zur beheizbaren Zwischenschicht verbunden. Anschließend wird die beheizbare Zwischenschicht, insbesondere das darin enthaltene Heizelement, an einer elektrisch leitenden Verbindung angeschlossen. Die elektrische Verbindung kann beispielsweise über zwei dünne Drähte oder eine elektrisch leitfähige Polymerfolie erfolgen. Dieses so erzeugte Modul kann daraufhin in eine vorher ausgeschnittene Klebefolie eingesetzt werden. Die Klebefolie wird mit einer oberen Scheibe und unteren Scheibe verbunden und im Autoklaven bei 65 °C bis 180 °C und 6 bar bis 12 bar für 65 min bis 180 min laminiert.

Die Erfindung umfasst des Weiteren die Verwendung der erfindungsgemäßen Scheibe in Verbindung mit einem optischen Sensor in Fahrzeugen, Flugzeugen, Hubschraubern und Schiffen. Dabei wird der optische Sensor hinter dem erfindungsgemäßen Scheibensegment der Scheibe angeordnet. Damit lässt sich in dem für den Sensor relevanten Wellenlängenbereich der Scheibe die Transmission und Absorption elektromagnetischer Strahlung in Abhängigkeit vom verwendeten Sensor gezielt einstellen. Die gesamte Scheibendimensionierung, sowie eine mögliche Ummantelung der Scheibe und des Sensors hängen dabei von dem jeweiligen Einsatzbereich ab. Möglich ist eine externe Anbringung oder eine interne Anordnung im Fahrzeuginnenraum.

Die Scheibe wird bevorzugt als Windschutzscheibe eines Fahrzeugs, besonders bevorzugt eines Personenkraftfahrzeuges oder Lastkraftwagens verwendet.

Die Scheibe wird in einer weiteren Ausführungsform bevorzugt als Intensitätsverminderer verwendet. Dabei wird der Tageslichtblocker so ausgewählt, dass störende Wellenlängen reduziert werden. Der Sensor kann damit unabhängig von der verwendeten Scheibe eingesetzt werden.

Im Folgenden wird die Erfindung anhand der Figuren 1 bis 8 erläutert. Die Figuren sind dabei rein schematische Darstellungen und sind nicht maßstabsgetreu. Sie beschränken die Erfindung in keiner Weise.

Die Erfindung wird anhand der Zeichnungen näher erläutert. Es zeigen:
Figur 1 einen schematischen Querschnitt des erfindungsgemäßen Scheibe (8) mit Tageslichtblocker (5),
Figur 2 einen schematischen Querschnitt einer bevorzugte Ausführungsform der erfindungsgemäßen Scheibe (8),
Figur 3 einen weiteren schematischen Querschnitt einer bevorzugten Ausführungsform der erfindungsgemäßen Scheibe (8),
Figur 4 einen weiteren schematischen Querschnitt einer bevorzugten Ausführungsform der erfindungsgemäßen Scheibe (8)
Figur 5 eine schematische Ansicht der erfindungsgemäßen Scheibe (8).
Figur 6 ein Fliesschema des Verfahrens zur Herstellung der erfindungsgemäßen Scheibe (8),
Figur 7 ein Fliesschema einer bevorzugten Ausführungsform des erfindungsgemäßen Verfahrens zur Herstellung der Scheibe (8) und
Figur 8 zeigt einen schematischen Querschnitt der erfindungsgemäßen Scheibe (8) mit Heizelement (9).

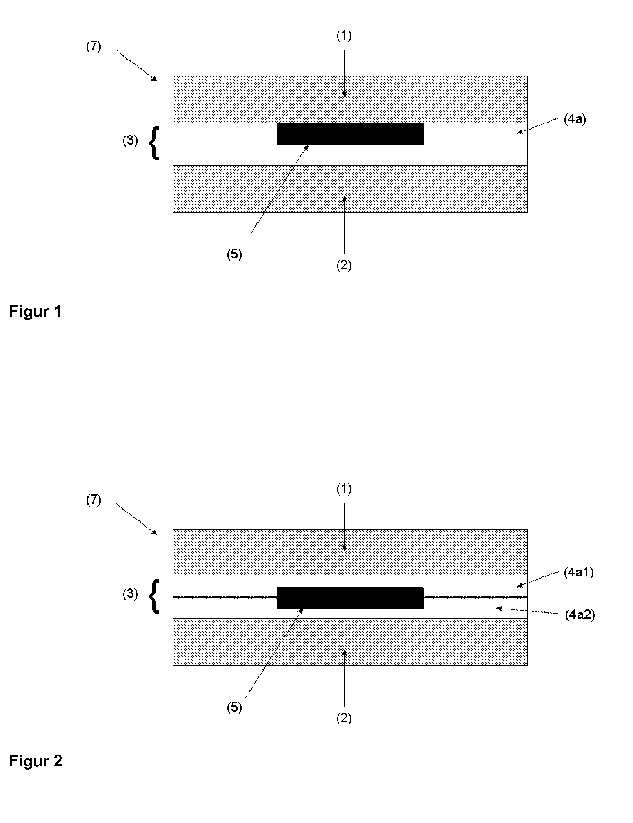

Figur 1 zeigt einen schematischen Querschnitt der erfindungsgemäßen Scheibe (8). Zwischen einer oberen Scheibe (1) und einer unteren Scheibe (2) befindet sich die Zwischenschicht (3). Diese setzt sich aus mindestens einer klebenden Folien (4a) und dem Tageslichtblocker (5) zusammen. Im einfachsten Fall kann der Tageslichtblocker (5) auf der Klebefolie (4a) platziert werden und zwischen der oberen Scheibe (1) und unteren Scheibe (2) laminiert werden.

Figur 2 zeigt einen weiteren schematischen Querschnitt einer bevorzugten Ausführungsform der erfindungsgemäßen Scheibe (8). Zwischen einer oberen Scheibe (1) und einer unteren Scheibe (2) befindet sich die Zwischenschicht (3). Diese setzt sich aus zwei klebenden Folien (4a1 und 4a2) und dem Tageslichtblocker (5) zusammen. Der Tageslichtblocker hat damit keine direkte Kontaktfläche mit der oberen Scheibe (1) und/oder der unteren Scheibe (2).

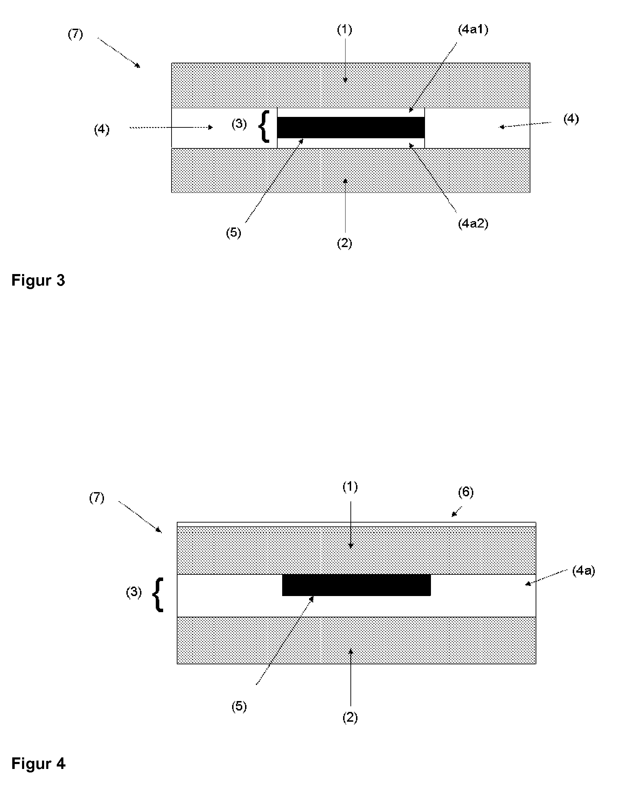

Figur 3 zeigt im schematischen Aufbau eine bevorzugte Ausführungsform der Scheibe (8). Dabei liegt der Tageslichtblocker (5) zwischen zwei klebenden Folien (4a1) und (4a2) eingebettet als Modul vor. Dieses befindet sich wiederum in einer Klebefolie (4), bei der die entsprechende Aussparung eingeschnitten wurde. Klebefolien (4) und (4a1, 4a2) enthalten gleiche und/oder verschiedene Materialien, wie beispielsweise PVB und/oder EVA. Die Klebefolie (4) ist zwischen einer oberen Scheibe (1) und einer unteren Scheibe (2) angeordnet.

Figur 4 zeigt im schematischen Aufbau eine bevorzugte Ausführungsform der Scheibe (8). Zwischen einer oberen Scheibe (1) und einer unteren Scheibe (2) befindet sich die Zwischenschicht (3). Diese setzt sich aus mindestens einer klebenden Folie (4a) und dem Tageslichtblocker (5) zusammen. Im einfachsten Fall kann der Tageslichtblocker (5) auf der Klebefolie (4a) platziert werden und zwischen der oberen Scheibe (1) und unteren Scheibe (2) laminiert werden. Die obere Scheibe (1) weist zusätzlich noch eine schmutzabweisende, hydrophobe Beschichtung (6) auf. Diese zeigt bevorzugt ein vergleichbares oder gleiches Transmissions- und Absorptionsverhalten wie der Tageslichtblocker (5).

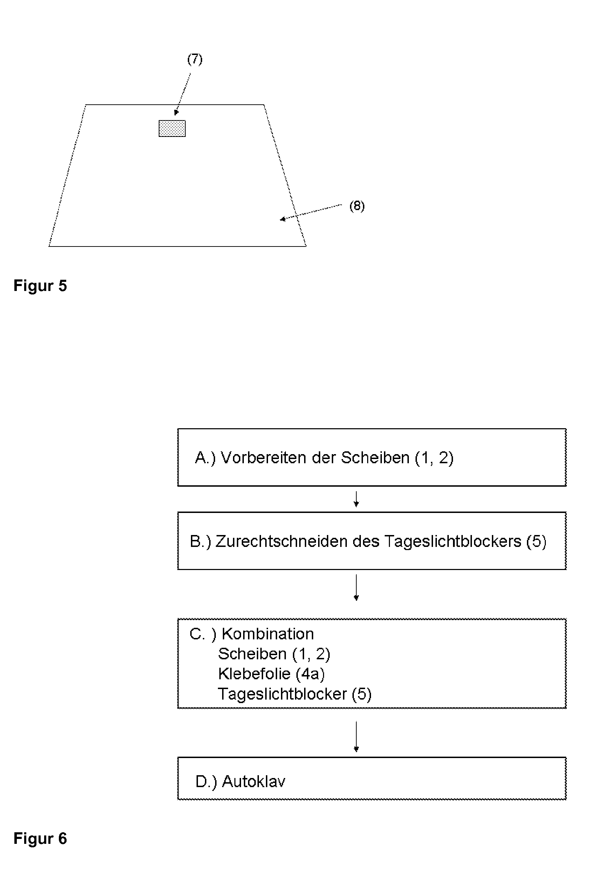

Figur 5 zeigt eine schematische Ansicht der erfindungsgemäßen Scheibe (8). Dabei ist die Anordnung und Positionierung des Scheibensegments (7) von der Position des Sensors hinter der Scheibe (8) abhängig.

Figur 6 zeigt ein Fliesschema des erfindungsgemäßen Verfahrens zur Herstellung der Scheibe (8). Das Verfahren beginnt dabei in Schritt **A)** mit einer entsprechenden Vorbehandlung der Scheiben, bevorzugt Glasscheibe, wie Schneiden, Biegen und den entsprechenden Reinigungsschritten. Die daraus erhaltenen obere Scheibe (1) und untere Scheibe (2) schließen später die erfindungsgemäße Scheibe (8) nach außen und innen ab.

Anschließend wird der Tageslichtblocker (5) in Schritt **B)** zurechtgeschnitten. Bei dem Tageslichtblocker (5) kann es sich um einen Polymerblock oder einen dünnen Polymerfilm handeln. Bevorzugte Filmdicken liegen dabei zwischen 100 µm und 1 cm.

Im folgenden Prozessschritt **C)** werden die obere Scheibe (1), untere Scheibe (2) und der Tageslichtblocker (5) aus Schritt **C)** über die Klebefolie (4a) verbunden. Die kombinierte Scheibenanordnung wird anschließend im Autoklaven **D)** bei 65 °C bis 180 °C und 6 bar bis 12 bar für 65 min bis 180 min laminiert.

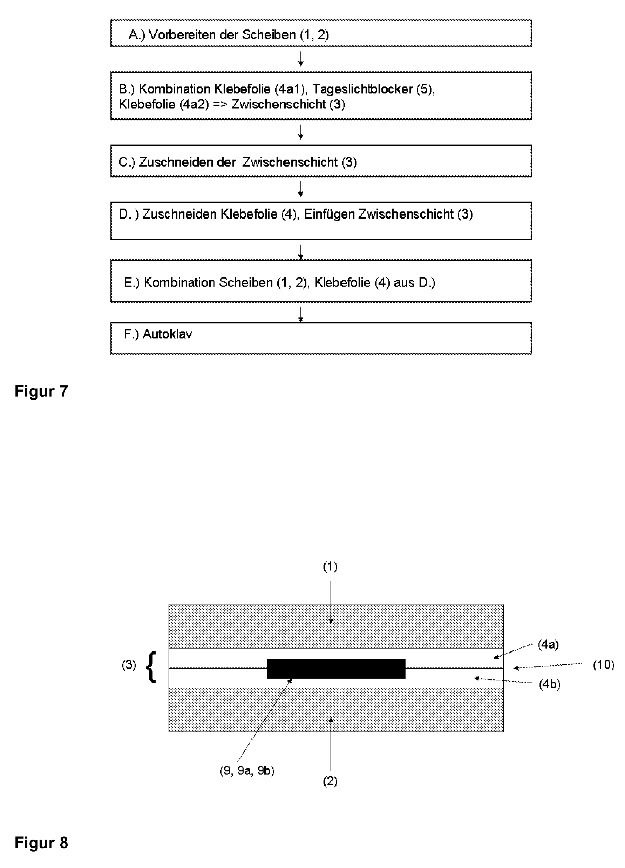

Figur 7 zeigt das Fliesschema einer bevorzugten Ausführungsform des erfindungsgemäßen Verfahrens. Dieses beginnt dabei wie in Figur 5 in Schritt **A)** mit einer entsprechenden Vorbehandlung der oberen Scheibe (1) und unteren Scheibe (2), bevorzugt Glasscheiben, wie Schneiden, Biegen und den entsprechenden Reinigungsschritten. Die Zwischenschicht (3) wird anschließend in Schritt **B)** durch Einbetten des Tageslichtblockers (5) in die Klebefolien (4a1 und 4a2) erhalten. Dieser Dreischichtkörper wird in Schritt **C)** zurechtgeschnitten. Die Zwischenschicht (3) wird im folgenden Schritt **D)** in eine Klebefolie (4) eingebettet. Diese erhält eine Aussparung entsprechend der Größe der Zwischenschicht (3), in die die Zwischenschicht (3) eingesetzt wird. Das beschriebene Verfahren ermöglicht dabei den Einbau und die Integrierung vorgefertigter Zwischenschichtelemente in bestehende Prozesse zur Herstellung von Verbundglasscheiben. Die so präparierte Klebefolie (4) wird zwischen der in Schritt A) vorbereiteten oberen Scheibe (1) und unteren Scheibe (2) angeordnet **E**) und im Autoklaven **F)** bei 65 °C bis 180 °C und 6 bar bis 12 bar für 65 min bis 180 min laminiert.

Figur 8 zeigt einen schematischen Querschnitt der erfindungsgemäßen Scheibe (8) mit Heizelement (9). Zwischen einer oberen Glasscheibe (1) und einer unteren Glasscheibe (2) befindet sich die beheizbare, optisch transparente Zwischenschicht (3). Diese setzt sich aus einem zwischen zwei klebenden Folien (4a, 4b) angeordnetem Heizelement (9) zusammen. Damit eine Stromversorgung des Heizelements (9) gewährleistet wird, ist dieses über eine elektrisch leitende Verbindung (10) mit einer Stromquelle verbunden. In Abhängigkeit vom verwendeten optischen Sensor sollten die oben genanten Komponenten im relevanten Bereich wie beispielsweise UV, VIS und/oder IR transparent sein. Insbesondere bei passiven Sensoren ist die Transparenz dabei von großer Bedeutung.

Es zeigen:
(1) obere Scheibe,
(2) untere Scheibe,
(3) Zwischenschicht,
(4) Klebefolie,
(4a) Klebefolie,
(4a1) obere Klebefolie,
(4a2) untere Klebefolie,
(5) Tageslichtblocker,
(6) schmutzabweisende, hydrophobe Beschichtung,
(7) Scheibensegment,
(8) Scheibe,
(9) Heizelement,
(9a) elektrisch leitfähige Kontaktierung,
(9b) optisch transparentes Polymer und
(10) elektrisch leitende Verbindung.

## Patentansprüche

1. Scheibe mit integrierten Scheibensegment umfassend:
- eine obere Scheibe (1),
- eine Zwischenschicht (3) umfassend:
- eine optisch transparente Klebefolie (4a),
- ein Tageslichtblocker (5) wobei der Tageslichtblocker (5) eine Transmission für Licht der Wellenlänge 300 nm bis 800 nm von < 10 % und für Licht der Wellenlänge von 800 bis 1000 nm von > 20 % aufweist und
- eine untere Scheibe (2).

2. Scheibe nach Anspruch 1, wobei der Tageslichtblocker (5) eine Transmission für Licht der Wellenlänge 380 nm bis 880 nm von < 5 %, bevorzugt < 0,1 % aufweist.

3. Scheibe nach Anspruch 1 oder 2, wobei der Tageslichtblocker (5) eine Transmission für Licht der Wellenlänge 880 nm bis 920 nm von > 50 %, bevorzugt > 85 % aufweist.

4. Scheibe nach einem der Ansprüche 1 bis 3, wobei der Tageslichtblocker (5) mindestens ein Polymer, bevorzugt PBT, PC, PET, EVA, PVB und/oder Blockpolymere oder Copolymere davon umfasst.

5. Scheibe nach einem der Ansprüche 1 bis 4, wobei die optisch transparente Klebefolie (4a) eine obere optisch transparente Klebefolie (4a1) und eine untere optisch transparente Klebefolie (4a2) umfasst.

6. Scheibe nach einem der Ansprüche 1 bis 5, wobei die Zwischenschicht (3) in einer Klebefolie (4) eingebettet ist.

7. Scheibe nach einem der Ansprüche 1 bis 6, wobei die obere Scheibe (1) und/oder die untere Scheibe (2) einen der Werkstoffe Glas und/oder Polymer, bevorzugt Flachglas und/oder Polymethylmethacrylat umfassen.

8. Scheibe nach einem der Ansprüche 1 bis 7, wobei das Scheibensegment (7) eine hydrophobe und/oder schmutzabweisende Beschichtung aufweist.

9. Scheibe nach einem der Ansprüche 1 bis 8, wobei das Scheibensegment (7) eine Fläche von 1 cm² bis 10000 cm², bevorzugt 50 cm² bis 1000 cm², besonders bevorzugt von 100 cm² bis 500 cm² aufweist.

10. Scheibe nach einem der Ansprüche 1 bis 9, wobei das Scheibensegment (7) eine kreisförmige, elliptische, rechteckige, oder trapezförmige Form aufweist.

11. Scheibe mit beheizbaren, optisch transparenten Scheibensegment (7), umfassend:
- eine obere Scheibe (1),
- eine beheizbare, optisch transparente Zwischenschicht (3) umfassend:
- eine obere Klebefolie (4a),
- ein Heizelement (9), wobei das Heizelement (9) ein optisch transparentes Polymer (9b) und eine elektrisch leitfähige Kontaktierung (9a) aus einer leitfähigen Beschichtung und/oder elektrisch leitfähige Leiterbahnen umfasst,
- eine elektrisch leitende Verbindung (10) zum Heizelement (9),
- und eine untere Klebefolie (4b) und
- eine untere Scheibe (2).

12. Verfahren zur Herstellung einer Scheibe, umfassend:
- Verbinden einer oberen Scheibe (1), einer Klebefolie (4a), eines Tageslichtblockers (5), einer untere Scheibe (2) und
- laminieren der verbundenen Teile im Autoklaven.

13. Verfahren zur Herstellung einer Scheibe, umfassend:
- Verbinden von Klebefolien (4a1, 4a2) und Tageslichtblocker (5) zur Zwischenschicht (3),
- Einschneiden einer Klebefolie (4) und Einsetzen der Zwischenschicht (3),
- Verbinden einer oberen Scheibe (1), unteren Scheibe (2), der Klebefolie (4) und der eingesetzten Zwischenschicht (3) und
- Laminieren der verbundenen Teile im Autoklaven.

14. Verwendung der Scheibe nach einem der Ansprüche 1 bis 12 in Verbindung mit einem optischen Sensor in Fahrzeugen, Flugzeugen, Hubschraubern und Schiffen, bevorzugt als Windschutzscheibe eines Fahrzeugs.
